# EUROPÄISCHE PATENTSCHRIFT

(11) **EP 3 321 167 B1**
(45) Veröffentlichungstag und Bekanntmachung des Hinweises auf die Patenterteilung: **09.08.2023**
(21) Anmeldenummer: 17201556.2
(22) Anmeldetag: 14.11.2017
(51) Int. Cl.: B63H 21/17

(54) **SYSTEM ZUM BETRIEB EINES MIT EINEM ELEKTROMOTOR AUSGERÜSTETEN BOOTS**
SYSTEM FOR OPERATING A BOAT EQUIPPED WITH AN ELECTRIC MOTOR
SYSTÈME DE FONCTIONNEMENT D'UN BATEAU ÉQUIPÉ D'UN MOTEUR ÉLECTRIQUE

(30) Priorität: 14.11.2016 DE 102016121818
(43) Veröffentlichungstag der Anmeldung: 16.05.2018
(73) Patentinhaber: Torqeedo GmbH, 82205 Gilching (DE)
(72) Erfinder: Biebach, Jens, 82327 Tutzing (DE); Krieger, Philipp, 86923 Finning (DE)
(74) Vertreter: Nordmeyer, Philipp Werner

(56) Entgegenhaltungen:
- EP-A2- 0 223 100
- DE-U1-202009 015 027

## Beschreibung

### Technisches Gebiet

Die vorliegende Erfindung betrifft ein System zum Betrieb eines mit einem Elektroantrieb ausgerüsteten Boots, bevorzugt eines mit einem oder mehreren Elektromotoren ausgerüsteten Boots und/oder eines mit einem Hybridantrieb, umfassend mindestens einen Verbrennungsmotor und mindestens einen Elektromotor, ausgerüsteten Boots.

### Technischer Hintergrund

Es ist bekannt, Boote mittels eines Elektroantriebs anzutreiben, wobei hier prinzipiell unterschiedliche Einbauarten des Elektromotors bekannt sind. Neben den auch im Bereich von Verbrennungsmotoren bekannten Einbauarten eines Elektromotors direkt an der Wellenanlage der Propellerwelle im Innenraum des Boots oder dem Einbau des Elektromotors im Innenraum des Boots an einem Z-Antrieb oder einem Saildrive sind weiterhin auch Einbauarten bekannt, bei welchen der Elektromotor außerhalb des Rumpfes des Boots angeordnet ist, beispielsweise in Form von Außenbordmotoren oder unter dem Rumpf in einer Antriebsgondel oder an der Ruderanlage vorgesehenen Pod-Antrieben.

Zur Versorgung des Elektromotors eines Bootsantriebs mit elektrischer Energie ist es bekannt, in dem Boot entsprechende Batteriebänke vorzusehen. Die Batterien der Batteriebänke können beispielsweise über ein Ladegerät, welches an einem Landanschluss angeschlossen ist, geladen werden, solange sich das Boot im Bereich eines Landanschlusses befindet - also typischer Weise im Hafen. Hierzu ist üblicherweise im Boot ein Ladegerät vorgesehen, über welches ein kontrolliertes Laden der Batterien der Batteriebänke erreicht werden kann. Dabei kann das Ladegerät entweder auf dem Boot selbst vorgesehen sein - hier spricht man dann von AC-Laden, oder das Ladegerät kann an Land sein und das Boot wird direkt mit einem Gleichstrom versorgt - hier spricht man dann von DC-Laden.

Bei einem Hybridsystem, welches neben dem Antrieb mittels des Elektromotors auch einen Verbrennungsmotor aufweist, sind prinzipiell zwei unterschiedliche Varianten bekannt.

In einer ersten Variante wirken der Elektromotor und der Verbrennungsmotor gemeinsam auf die Wellenanlage des Bootes, so dass wahlweise ein einzelner oder ein gleichzeitiger Antrieb des Propellers über den Verbrennungsmotor und/oder über den Elektromotor möglich ist. Die beiden Antriebe sind über entsprechende Getriebe in die Wellenanlage einkoppelbar. Sowohl der Elektromotor als auch der Verbrennungsmotor können entsprechend gleichzeitig oder nacheinander über die Getriebe auf die Wellenanlage und damit auf den Propeller wirken.

In einer zweiten Variante wirkt nur der Elektromotor auf den Propeller und der Verbrennungsmotor ist mit einem Generator gekoppelt, welcher eine Versorgung des Elektromotors und das Laden der Batterien der Batteriebänke vornimmt. Damit können die Batterien der Batteriebänke auch dann geladen werden, wenn sich das Boot nicht im Bereich eines Landstromanschlusses befindet. In dieser Variante kann eine Energieversorgung des Elektromotors, welcher zum Fahren verwendet wird, entweder über die Batteriebänke oder über einen mit dem Elektromotor gleichzeitigen Betrieb des Generators durchgeführt werden.

Weiterhin ist es bekannt, die Batterien der Batteriebänke weiterhin mittels am Boot vorgesehener regenerativer Energieumwandler zu laden, beispielsweise mittels Solarzellen, welche beispielweise auf einem Dach des Boots angeordnet sind, oder mittels eines Windgenerators, welcher am Boot vorgesehen ist.

Das für den Betrieb des Elektroantriebs vorgesehene System kann, neben der Versorgung des eigentlichen Elektroantriebs auch zur Versorgung anderer Verbraucher an Bord verwendet werden, beispielsweise zur Versorgung von Kommunikationseinrichtungen, Leuchten und anderen Verbrauchern auf dem Boot, welche nicht unmittelbar mit dem Elektroantrieb verbunden sind.

Ein entsprechendes System ist beispielsweise aus der EP 2 330 030 A2 bekannt.

Bei den bekannten Systemen ist es erforderlich, dass eine zentrale Systemsteuerung, so wie sie beispielsweise aus dem genannten Stand der Technik bekannt ist, an die jeweiligen Komponenten des Systems individuell angepasst wird. Entsprechend kann ein einfacher Austausch von Systemkomponenten nicht durchgeführt werden, sondern es muss stets eine erneute Programmierung durchgeführt werden, um auf diese Weise nach einem Komponentenaustausch oder einem Defekt eine Funktion des Systems erneut bereitzustellen.

Die DE 20 2009 015027 U1 zeigt eine Vorrichtung zum Steuern eines Fahrzeugs und die EP 0 223 100 A2 zeigt eine Steuereinrichtung für einen Druckmaschinenantriebsmotor.

### Darstellung der Erfindung

Ausgehend von dem bekannten Stand der Technik ist es eine Aufgabe der vorliegenden Erfindung, ein System zum Betrieb eines mit einem Elektroantrieb ausgerüsteten Boots anzugeben, welches einen vereinfachten Aufbau und eine erhöhte Zuverlässigkeit bereitstellt.

Ein System mit einem vereinfachten Aufbau und einer erhöhten Zuverlässigkeit wird durch ein System mit den Merkmalen des Anspruchs 1 bereitgestellt. Vorteilhafte Weiterbildungen ergeben sich aus der Beschreibung, den Unteransprüchen sowie den Figuren.

Entsprechend wird ein System entsprechend Anspruch 1 vorgeschlagen.

Dadurch, dass der Komponentencontroller eine Komponentenschnittstelle zum Anschließen einer Systemkomponente des Elektroantriebs und eine Kommunikationsschnittstelle zum Anschließen des Komponentencontrollers an einen Systembus umfasst, fungiert der Komponentencontroller quasi als Zwischenglied zwischen der spezifischen physischen Systemkomponente, welche beispielsweise eine Batterie, ein Elektromotor, ein Generator, ein Umrichter oder ein Verbrennungsmotorantrieb sein kann, und dem Systembus.

Damit stehen die spezifischen Systemkomponenten nur über den Komponentencontroller mit dem Systembus der Fahrsteuerung in Kommunikation, eine direkte Kommunikation der Systemkomponenten mit dem Systembus findet hingegen nicht statt. Damit kann der Systembus der Fahrsteuerung klar definiert, robust und sicher ausgebildet sein. Eine Anpassung des Systembusses bei einem Austausch von Systemkomponenten ist entsprechend nicht notwendig. Der jeweilige, mit der Systemkomponenten verbundene Komponentencontroller ist nämlich dazwischengeschaltet und übernimmt jeweils die Übersetzung und Aufbereitung der Signale, Zustände und Datenkommunikation der spezifischen Systemkomponente für den Systembus.

Weiterhin findet eine Entkopplung der Systemkomponenten von dem Systembus statt, so dass Defekte individueller Systemkomponenten den Systembus nicht stören können.

Unter dem System zum Betrieb eines mit einem Elektromotor ausgerüsteten Boots wird insbesondere ein solches verstanden, welches zumindest die für das Fahren des Bootes notwendigen Systemkomponenten umfasst und miteinander in Bezug setzt. Zum Fahren eines mit einem Elektromotor ausgerüsteten Boots ist neben dem eigentlichen, den Elektromotor umfassenden, Antrieb mit einem Propeller oder einem Jet-Antrieb auch eine Energieversorgung für den Elektromotor vorgesehen, die beispielsweise in Form einer Batterie, aber auch in Form eines Generators vorgesehen sein kann. Weiterhin umfasst ein solches System eine Eingabeeinheit zum Vorgeben einer gewünschten Fahrstufe durch den Bediener des Systems.

Neben den genannten Systemkomponenten, die für das eigentliche Fahren notwendig sind, kann ein System zum Betrieb eines mit einem Elektromotor ausgerüsteten Boots auch weitere Nebensystemkomponenten aufweisen wie beispielsweise Ladegeräte für das Aufladen einer Batterie, Gleichstrom/Gleichstrom Wandler, Gleichstrom/Wechselstrom Wandler, Generatoren und eine Mehrzahl von Nebenverbrauchern wie Kommunikationsgeräte, Positionsleuchten, Navigationsgeräte, Unterhaltungsgeräte, Beleuchtung, Küchengeräte, Kühlgeräte etc.

Der Komponentencontroller weist ein Abstraktionsmodul auf, mittels welchem eine an der Systemschnittstelle angeschlossene spezifische Systemkomponente des Elektroantriebs an der Kommunikationsschnittstelle als generische Systemkomponente dargestellt wird.

Durch das Abstraktionsmodul ermöglicht es der Komponentencontroller, die jeweilige spezifische Systemkomponente auf ein generisches Niveau zu abstrahieren, so dass die Systemkomponente von einer übergeordneten Fahrsteuerung oder Systemsteuerung einfach erkannt, angesprochen und angesteuert werden kann.

Unter einer generischen Systemkomponente wird eine solche verstanden, welche die zum Betrieb des Systems notwendigen Steuerungs- und Zustandsparameter sowie Datenkommunikation und/oder Steuerbefehle in einer allgemeinen Form aufweist, ohne auf die spezifischen technischen Parameter der angeschlossen Systemkomponente Rücksicht nehmen zu müssen.

Beispielsweise kann bei einer Batterie beziehungsweise Batteriebank als Steuerungsparameter ein Einschaltsignal zum Systemstart notwendig sein. An der generischen Komponente ist nur der Befehl "Einschalten" vorhanden - die komponentenspezifische Umsetzung wird dann von dem Komponentencontroller anhand der spezifischen Eigenschaften der über die Komponentenschnittstelle angeschlossenen Batterie beziehungsweise Batteriebank vorgenommen. Wird an der Kommunikationsschnittstelle über den Systembus entsprechend der Befehl empfangen, die Batteriebank beim Systemstart einzuschalten, so setzt der Komponentencontroller diesen Befehl je nach der an der Komponentenschnittstelle angeschlossener Batterie dadurch um, dass bei einem ersten Batterietyp beispielsweise ein 12V Zündsignal übergeben wird, bei einem zweiten Batterietyp ein 24V Zündsignal übergeben wird und bei einem dritten Batterietyp ein Impuls zum Schalten eines Lastrelais übergeben wird.

Als Zustandsparameter kann von der Batterie beispielsweise ein Ladezustand an den Komponentencontroller übergeben werden, welcher dann an der Kommunikationsschnittstelle beispielsweise abstrahiert einen prozentualen Ladezustand oder eine konkrete Restkapazität bereitgestellt wird.

Damit verhalten sich alle an dem Komponentencontroller angeschlossene Systemkomponenten eines Systemkomponententyps gleich. Mit anderen Worten wird an der Kommunikationsschnittstelle eine generische Batterie immer gleich angezeigt und angesprochen, unabhängig von der konkreten technischen Ausprägung der Batterie.

Weiterhin wird ein Elektromotor angegeben, bei dem als generischer Elektromotor beispielsweise nur eine Fahrstufe als Fahrbefehl übergeben werden kann. Entsprechend wird von einer übergeordneten Fahrtsteuerung über den Systembus der Fahrbefehl z.B. "Halbe Kraft voraus", "Volle Kraft voraus", "Volle Kraft zurück" oder auch ein prozentualer Fahrbefehl z.B. "80% voraus", "20% zurück" übergeben, der dann im Komponentencontroller in eine entsprechende Drehzahlvorgabe, Drehmomentvorgabe oder Leistungsvorgabe für den spezifischen, an der Komponentenschnittstelle angeschlossenen Elektromotor umgesetzt wird und in einen der jeweiligen, an der Komponentenschnittstelle angeschlossenen Leistungselektronik gemäßen Steuerbefehl umgesetzt wird.

An der Kommunikationsschnittstelle werden bei einem Elektromotor beispielsweise auch Zustandsparameter wie beispielsweise die Temperatur, bevorzugt eine prozentuale Temperatur bezüglich einer für den jeweiligen über die Komponentenschnittstelle angeschlossenen spezifischen Elektromotor zulässigen Höchsttemperatur, übergeben. Eine übergeordnete Fahrtsteuerung kann entsprechend die derzeitige prozentuale Temperaturbelastung auslesen, unabhängig von der absoluten Temperaturbelastbarkeit des spezifischen Elektromotors.

Mit anderen Worten kann eine übergeordnete Steuerung, die mit dem Komponentencontroller über den Systembus kommuniziert, eine an dem Komponentencontroller über die Komponentenschnittstelle angeschlossene Systemkomponente direkt und allgemein ansprechen, ohne auf technische Besonderheiten oder spezielle Spezifikationen der spezifischen Systemkomponente Rücksicht nehmen zu müssen. Gleichermaßen empfängt die übergeordnete Steuerung Zustandsparameter und Datenkommunikation nur in einem generischen Format.

An der übergeordneten Steuerung muss entsprechend auch bei einem Austausch von Systemkomponenten - beispielsweise dem Einbau eines leistungsfähigeren Motors oder dem Austausch der Batteriebank durch eine Batteriebank mit höherer Kapazität - keine Veränderung vorgenommen werden und das Gesamtsystem kann wartungsfreundlich und skalierbar aufgebaut sein.

Bevorzugt können an einer einzigen Komponentenschnittstelle mindestens zwei unterschiedliche Systemkomponenten alternativ anschließbar sein und der Komponentencontroller kann abhängig von der angeschlossenen Systemkomponente so konfigurierbar sein, dass die jeweils angeschlossene spezifische Systemkomponente als generische Systemkomponente dargestellt wird.

Damit können Systemkomponenten, beispielsweise eine Batterie oder ein Elektromotor, alternativ am einem Komponentencontroller angeschlossen werden, Mit anderen Worten kann, wenn an die Komponentenschnittstelle des Komponentencontrollers eine Batterie angeschlossen ist, an der Kommunikationsschnittstelle eine generische Batterie dargestellt werden und wenn anstelle der Batterie an der Komponentenschnittstelle des gleichen Komponentencontrollers ein Elektromotor angeschlossen ist, an der Kommunikationsschnittstelle ein generischer Elektromotor dargestellt werden. Damit kann mittels eines einzigen Typs von Komponentencontrollern je nach angeschlossener Systemkomponente an der Kommunikationsschnittstelle jeweils eine entsprechende generische Systemkomponente dargestellt werden und es ist nicht notwendig, für jeden Typ von Systemkomponenten einen spezifischen Komponentencontroller vorzusehen. Es wird lediglich der Komponentencontroller an die spezifische daran angeschlossene Systemkomponente dadurch angepasst, dass die entsprechenden Parameter aktualisiert werden. Mit anderen Worten findet eine Initialisierung des Komponentencontrollers dadurch statt, dass der Komponentencontroller an die jeweilige, an die Komponentenschnittstelle angeschlossene Systemkomponente angepasst wird - durch eine entsprechende Parametrierung und/oder durch die Verwendung entsprechender Übersetzungstabellen für die Datenkommunikation und/oder durch eine entsprechende interne Verschaltung.

Damit ergibt sich in dem Gesamtsystem des Boots die Möglichkeit, identische Komponentencontroller für den Anschluss einer Vielzahl unterschiedlicher oder sogar aller Typen von Systemkomponenten vorzusehen. Damit wird die Zahl der möglichen Gleichteile innerhalb des Systems größer, was auch einen vorteilhaften Effekt auf die Wartungsfähigkeit und die Kosten hat.

Auf diese Weise ist es auch möglich, Systemkomponenten und/oder Komponentencontroller, beispielsweise beim Auftreten eines Defekts, gegeneinander auszutauschen, ohne einen Eingriff in der übergeordneten Steuerung durchführen zu müssen. Der Systemcontroller steuert weiterhin die über den Komponentencontroller dargestellte generische Komponente an.

Bei einem Defekt eines Komponentencontrollers, an dessen Komponentenschnittstelle der Elektromotor angeordnet ist, kann der Elektromotor beispielsweise von dem defekten Komponentencontroller abgeschlossen werden und an einen funktionierenden Komponentencontroller angeschlossen werden, der für den reinen Fahrbetrieb nicht essentiell ist - beispielsweise an einen Komponentencontroller, an dessen Komponentenschnittstelle das Ladegerät des Landanschlusses angeschlossen ist. Damit kann in einer Notsituation auf See entsprechend der Fahrbetrieb auch bei einem Defekt einer Komponentenschnittstelle aufrechterhalten werden.

Dadurch, dass der Komponentencontroller im Prinzip mit beliebigen Systemkomponenten verbunden sein kann, beispielsweise mit einer Batterie oder mit der Leistungselektronik eines Elektromotors des Elektroantriebs oder einem Ladegerät zum Laden der Batterie oder einem Generator zum Laden der Batterie, und die dafür vorgesehenen Komponentencontroller stets identisch aufgebaut sind, kann hier neben der vereinfachten Ausbildung der Programmierung einer übergeordneten Steuerung auch ein effizienter Aufbau der Vorrichtung bereitgestellt werden. Darüber hinaus lassen sich auf diese Weise auch Redundanzen im System dahingehend aufbauen, dass beim Ausfall eines Komponentencontrollers ein anderer Komponentencontroller an dessen Stelle treten kann.

Auf diese Weise ist es möglich, die Fahrfunktionen des Boots und damit die Manövrierfähigkeit aufrecht zu erhalten und auf diese Weise ein redundantes und sicheres System aufzubauen.

Bevorzugt ist ein Anschlusseinheitscontroller vorgesehen, welcher über den Systembus mit dem Komponentencontroller kommuniziert und über welchen der Komponentencontroller Fahrbefehle empfängt. Besonders bevorzugt kommuniziert der Anschlusseinheitscontroller mit einer Eingabevorrichtung, beispielsweise einem Ferngashebel, zur Vorgabe einer Fahrstufe durch einen Bediener und der Anschlusseinheitscontroller steuert der vorgegebenen Fahrstufe entsprechend einen oder mehrere Komponentencontroller über den Systembus an, um die vorgegebene Fahrstufe zu erreichen.

Bevorzugt fasst der Anschlusseinheitscontroller mindestens zwei Komponentencontroller zu einer organisatorischen Anschlusseinheit, insbesondere als Core-System, zusammen und steuert die grundlegenden Fahrfunktionen.

Bevorzugt kommuniziert der Anschlusseinheitscontroller mit einer Vorrichtung zum Vorgeben einer gewünschten Fahrstufe, beispielsweise mit einem Ferngashebel, über welchen entsprechend die jeweilige Fahrstufe des Elektroantriebs vorgegeben wird. Damit kann über eine direkte Kommunikation zwischen dem Ferngashebel und dem Anschlusseinheitscontroller der Anschlusseinheitscontroller die jeweiligen, durch den Komponentencontroller als generische Systemkomponenten dargestellten Komponenten bezüglich der grundlegenden Fahrfunktionen ansteuern.

Beispielsweise kann über einen mittels des Ferngashebels von dem Bediener vorgegebenen Fahrbefehl, welcher an den Anschlusscontroller übergeben wird, der Anschlusseinheitscontroller über den Systembus und die Kommunikationsschnittstelle direkt dem angesprochenen Komponentencontroller den Fahrbefehl übergeben.

Der Anschlusseinheitscontroller kann entsprechend zur Organisation der Anschlusseinheit zum einen und zum anderen zum Abarbeiten der jeweiligen Fahrbefehle verwendet werden, so dass hier kurze Reaktionszeiten und insbesondere auch kurze Systemstartzeiten erreicht werden können. Ein schnelles Hochfahren des Systems und ein Umsetzen eines Fahrbefehls ist insbesondere dann von Bedeutung, wenn beim Manövrieren des Bootes eine schnelle Reaktion erforderlich ist, beispielsweise bei einer plötzlich auftretenden Not-Stopp-Situation, bei welcher ein Not-Stopp-Manöver durchgeführt werden muss, oder wenn andere Manövrierfunktionen von Bedeutung sind.

Es ist entsprechend möglich, ohne Einbeziehung eines Systemcontrollers oder gar eines bootsweiten Netzwerkes die Fahrbefehle unmittelbar und direkt durch die Übergabe der jeweiligen Fahrbefehle beziehungsweise Fahrstufenwünsche von dem Ferngashebel auf den Anschlusseinheitscontroller und von diesem über den internen Kommunikationsbus innerhalb der Anschlusseinheit an die jeweiligen Komponentencontroller zu übergeben. Damit kann die Manövrierfähigkeit des Boots schnell hergestellt werden und robust aufrecht erhalten bleiben.

In einer bevorzugten Weiterbildung ist der Systemcontroller dazu eingerichtet, durch eine entsprechende Initialisierung auch als Anschlusseinheitscontroller zu dienen. Damit kann auf einen separaten Anschlusseinheitscontroller verzichtet werden und die Anzahl der Gleichteile im System kann noch weiter gesteigert werden.

Bevorzugt sind die Komponentencontroller und der Anschlusseinheitscontroller baulich zusammengefasst in einem Gehäuse, welches als Anschlusseinheit bezeichnet wird. In der Anschlusseinheit, welche entsprechend aus einem Anschlusseinheitscontroller und einer Mehrzahl von Komponentencontrollern besteht, findet eine Kommunikation zwischen der Kommunikationsschnittstelle des Komponentencontrollers und der Kommunikationsschnittstelle des Anschlusseinheitscontrollers über einen Systembus, welcher innerhalb der Anschlusseinheit vorgesehen ist, statt. Bei dem Systembus kann es sich beispielsweise um einen solchen handeln, welcher über ein bekanntes Protokoll kommuniziert, beispielsweise einen CANopen Bus oder ein anderes standardisiertes Protokoll. Es kann aber auch ein proprietäres Protokoll verwendet werden.

Sowohl jeder Komponentencontroller als auch jeder Anschlusseinheitscontroller als auch jeder Systemcontroller umfassen jeweils einen eigenen Mikroprozessor, über welchen die entsprechenden Anwendungen abgearbeitet werden können, und über welche die Kommunikation über die entsprechenden Busse abgewickelt werden kann.

In dem System können auch mindestens zwei Anschlusseinheiten mit jeweils mindestens einem Komponentencontroller, einem Anschlusseinheitscontroller und einem Systemcontroller vorgesehen sein und die Systemcontroller der Anschlusseinheiten kommunizieren dann miteinander, wobei dann ein Systemcontroller als Mastersystemcontroller fungiert und alle anderen Systemcontroller als Slave-Systemcontroller betrieben werden.

Auf diese Weise kann ein verteiltes System in dem Boot bereitgestellt werden, wobei beispielsweise beim Vorsehen eines Elektroantriebs mit mehr als einem Elektromotor jedem Elektromotor und den dem Elektromotor zugeordneten Batteriebänken je eine Anschlusseinheit zugewiesen ist. Eine weitere Anschlusseinheit kann beispielsweise für einen beabstandet von den Elektromotoren vorgesehenen Generator vorgesehen sein. Auch die Batteriebänke können, wenn sie beabstandet von den ihnen zugeordneten Elektromotoren im Boot angeordnet sind, mit einer eigenen Anschlusseinheit versehen sein. Durch die Kommunikation der Systemcontroller der einzelnen Anschlusseinheiten untereinander kann auch ein solches verteiltes System einfach skalierbar und einfach wartbar aufgebaut werden.

In einer besonders bevorzugten Ausführungsform ist der Komponentencontroller dazu eingerichtet, auf der Grundlage der über die Komponentenschnittstelle angeschlossenen Systemkomponente erkennen, welche Systemkomponente konkret angeschlossen ist, und entsprechend eine Initialisierung gemäß der jeweiligen spezifischen Systemkomponente durchführen.

### Kurze Beschreibung der Figuren

Bevorzugte weitere Ausführungsformen der Erfindung werden durch die nachfolgende Beschreibung der Figuren näher erläutert. Dabei zeigen:
Figur 1 eine schematische Darstellung der beschriebenen Systemarchitektur;
Figur 2 eine schematische Darstellung der Schichtenstruktur der Implementierung;
Figur 3 eine schematische Darstellung eine Wartungszugangs.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

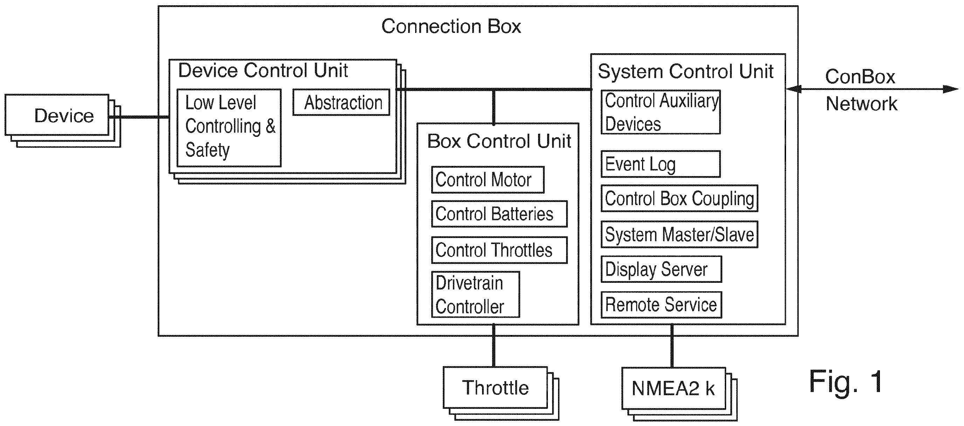

In Figur 1 ist schematisch das System gezeigt, wobei in einer Anschlusseinheit (Connection Box) mindestens ein Komponentencontroller (Device Control Unit - DCU) vorgesehen ist, welcher mit einzelnen Systemkomponenten (Device) über die Komponentenschnittstelle verbindbar ist.

Weiterhin ist ein Anschlusseinheitscontroller (Box Control Unit - BCU) vorgesehen, mittels welchem die Komponentencontroller in der Anschlusseinheit organisiert und über den Systembus angesteuert werden können.

In dem Komponentencontroller ist neben der Hardwarsteuerung auch ein Abstraktionsmodul (Abstraction) vorgesehen, welches eine Darstellung der über die Komponentenschnittstelle angeschlossenen spezifischen Systemkomponenten als generische Systemkomponente an der Kommunikationsschnittstelle zum Systembus hin ermöglicht.

In dem Komponentencontroller können neben der Abstraktion des Abstraktionsmoduls, mittels welchem die konkret an dem Komponentencontroller angeschlossene Systemkomponente auf eine generische Systemkomponente abstrahiert wird, auch an der Komponentenschnittstelle entsprechende Steuersignale an die Systemkomponente ausgegeben werden.

Beispielsweise kann an der Komponentenschnittstelle des Komponentencontrollers beim Anschluss einer Batterie eine entsprechende Zündspannung ausgegeben werden, um die Batterie in den Betriebsmodus zu bringen. Hierzu kann beispielsweise eine Zündspannung von 12 V an die Batterie übergeben werden, wenn der Anschlusseinheitscontroller über den Systembus innerhalb der Anschlusseinheit an den Komponentencontroller, an welchem die Batterie angeschlossen ist, eine Anforderung zum Einschalten der Batterie übergibt. Bei einem anderen Batterietyp kann der Komponentencontroller hingegen an seiner Komponentenschnittstelle so ausgebildet sein, dass eine andere Zündspannung, welche dem jeweiligen spezifischen Batterietyp angemessen ist, übergeben wird, oder ein anders gelagertes Zündsignal beziehungsweise Einschaltsignal der Batterie übergeben.

Weiterhin kann der Komponentencontroller für die jeweilige Systemkomponente grundlegende Steuerfunktionen und Sicherheitsfunktionen übernehmen (Low level controlling & safety).

Über die Komponentenschnittstelle kann auch eine Buskommunikation mit den Systemkomponenten durchgeführt werden, um über die Komponentenschnittstelle auch eine Datenkommunikation mit den Systemkomponenten zu ermöglichen. Dies kann beispielsweise durch das Bereitstellen eines CAN Busses oder durch einen seriellen Bus wie UART oder LIN oder RS485 oder RS232 oder einen anderen Bus, der mit der jeweiligen Systemkomponente in Kommunikation stehen kann, erreicht werden.

Die Buskommunikation mit der Systemkomponenten ist unabhängig von der Kommunikation des Komponentencontrollers mit dem Systembus über dessen Kommunikationsschnittstelle. Mit anderen Worten steht der Systembus nicht direkt mit den Systemkomponenten in Kommunikation, sondern ein Datenaustausch mit den Systemkomponenten findet nur über das Zwischenschalten des Komponentencontrollers statt. Eine direkte Kommunikation der Systemkomponenten mit dem Systembus ist damit nicht möglich. Vielmehr findet die Kommunikation mit den Systemkomponenten aus Sicht des Systembusses ausschließlich über den jeweiligen Komponentencontroller statt.

Die beispielhaft genannte Batterie ihrerseits übermittelt über die Komponentenschnittstelle beispielsweise ihre Temperatur, ihren Ladungsgrad, die derzeitige Entladung, die Restkapazität oder andere Parameter, welche für den Bootsantrieb von Bedeutung sein können.

Ist an dem Komponentencontroller über die Komponentenschnittstelle ein Elektromotor angeschlossen, so ist die Komponentenschnittstelle mit der Leistungselektronik des Motors verbunden und kann entsprechend die Sensorsignale, welche von der Leistungselektronik bereitgestellt werden, an der Kommunikationsschnittstelle in allgemeiner Form bereitstellen, ohne dass die spezifische Kenntnis für den jeweiligen Elektromotor auf dem Systembus weitergegeben werden muss. Mit anderen Worten kann beispielsweise vom Elektromotor eine Drehzahl, ein anliegendes Drehmoment, die Leistung, eine Temperatur und andere Parameter über die Komponentenschnittstelle an den Komponentencontroller übergeben werden, welcher die spezifischen Daten dann abstrahiert und über die Kommunikationsschnittstelle generisch bereitstellt.

Weiterhin ist es in diesem Fall über den Komponentencontroller möglich, einen entsprechenden Fahrbefehl, welcher von dem Anschlusseinheitscontroller über den Systembus erhalten wird, in ein spezifisches Fahrsignal beziehungsweise Betriebssignal für die spezifische Leistungselektronik des jeweiligen Elektromotors umzuwandeln und über die Komponentenschnittstelle der jeweiligen Leistungselektronik bereitzustellen. Entsprechend kann der Komponentencontroller dann die Leistungselektronik anweisen, den spezifischen Elektromotor mit der vom Bediener des Elektroantriebs über den Ferngashebel vorgegebenen Fahrstufe zu betreiben.

Weiterhin können in dem Komponentencontroller, abhängig von dem über die Komponentenschnittstelle angeschlossenen Systemkomponente, neben den grundlegenden Steuerfunktionen, welche abhängig von der angeschlossenen Systemkomponente sind, gleichzeitig auch grundlegende Sicherheitsfunktion für diese spezifische Systemkomponente implementiert werden. Beispielsweise kann auf Grundlage der Kenntnis der jeweils angeschlossenen Systemkomponenten, beispielsweise eines Elektromotors, eine Strombegrenzung, eine Drehmomentbegrenzung oder eine Temperaturbegrenzung bereits in dem Komponentencontroller spezifisch für die angeschlossene Systemkomponente implementiert werden. Entsprechend wird, wenn von dem Anschlusseinheitscontroller ein Fahrbefehl übermittelt wird, der Komponentencontroller die vorgegebenen Sicherheitsparameter berücksichtigen und gegebenenfalls die implementierten Sicherheitsfunktionen zum Zuge kommen lassen, und auf diese Weise eine Beschädigung oder Überlastung der angeschlossenen Systemkomponenten vermeiden.

In dem Komponentencontroller können zum Schalten von über die Komponentenschnittstelle angeschlossenen Systemkomponenten unter anderem auch Strommanagementkomponenten, wie Schalter, Sicherungen und Strom- beziehungsweise Spannungsmesser vorgesehen sein, um auf diese Weise ein Schalten der jeweiligen angeschlossenen Systemkomponente mit den erforderlichen Schaltspannungen oder Schaltströmen zu ermöglichen und auf der anderen Seite über eine Absicherung auch zu verhindern, dass hier Systemkomponenten beschädigt werden können.

Der Anschlusseinheitscontroller kann als Master der jeweiligen Anschlusseinheit dienen und nummeriert und überwacht die logischen und über den Komponentencontroller abstrahierten Systemkomponenten. Wenn zumindest eine abstrahierte Batterie, ein abstrahierter Motor und ein abstrahierter Gasgriff zu finden ist, stellt der Anschlusseinheitscontroller auch die grundlegenden Funktionen zum Fahren bereit. Auf diese Weise wird das reine Fahren des Boots mit Elektroantrieb einfach, robust und fehlerreduziert möglich, und die Funktion kann weiterhin gut überprüft werden.

Auf diese Weise können auch die Vorgaben bezüglich eines schnellen Systemstarts und einer schnellen Operabilität nach dem Systemstart erreicht werden.

Weiterhin kann in einer Anschlusseinheit auch ein Systemcontroller (System Control Unit) vorgesehen sein, welcher zum einen die über den Systembus kommunizierten Stati und Signale aufnimmt, zum anderen auch die aus der weiteren Umgebung des Systems beziehungsweise des Boots bereitgestellten Informationen verarbeitet. Der Systemcontroller kann beispielsweise auch eine Kommunikation mit einer weiteren Anschlusseinheit übernehmen, um beim Vorliegen von mehr als einer Anschlusseinheit den entsprechenden Gesamtsystemzustand bestimmen zu können.

Entsprechend kann der Systemcontroller beispielsweise den gesamten Systemzustand auch an eine zentrale Anzeigeeinheit übermitteln, die Belastung unterschiedlicher Batteriebänke untereinander ausgleichen, beim Einsatz von Ladegeräten die Ladeströme auf die unterschiedlichen Batteriebänke effizient verteilen und auch die anderen Lasten, welche in dem Gesamtsystem vorliegen, wie beispielsweise Nebenverbraucher und zusätzliche Verbraucher, welche mit dem eigentlichen Elektroantrieb nichts zu tun haben, so zu balancieren, dass eine effiziente Ausnutzung des Systems vorliegt. Weiterhin können über den Systemcontroller auch das Laden von Batterien in einem Hybridsystem mittels eines Generators beziehungsweise die Zustände, welche durch das Schalten eines Antriebs mit Verbrennungsmotor in dem Elektroantriebssystem auftreten, bei der gesamten Verteilung und Lastbalancierung berücksichtigt werden.

Der Systemcontroller ist zum einen mit dem Systembus, welcher in der Anschlusseinheit zur Kommunikation der Komponentencontroller mit dem Anschlusseinheitscontroller vorgesehen ist, verbunden und ist über ein Netzwerk mit den weiteren Systemcontrollern verbunden, welche sich in dem jeweiligen System, und insbesondere in anderen Anschlusseinheiten, befinden. Der Systemcontroller kann weiterhin auch an ein bootsweites Kommunikationsnetz, insbesondere einen Bootsbus, beispielsweise einen NMEA2k- Bus, angeschlossen sein, um gleichzeitig auch Informationen bezüglich weiterer Verbraucher oder der Umweltbedingungen in die Darstellung des Systemzustandes beziehungsweise die Vorhersage von Reichweiten und anderen Systemzuständen erhalten zu können.

Der Systemcontroller, welcher in jeder Anschlusseinheit vorgesehen ist, bildet über das Netzwerk mit anderen Systemcontrollern anderer Anschlusseinheiten ein Netzwerk aus, wobei nur ein einziger Systemcontroller als Master fungiert, und die anderen Systemcontroller hingegen als Slave. Auf diese Weise ist eine beliebige Skalierbarkeit des Systems mit einer Vielzahl von Anschlusseinheiten möglich.

Der Systemcontroller, neben dem Anschluss an den NMEA2k-Bus, sammelt entsprechend die gesamten abstrahierten Systemkomponentendaten und kann auf diese Weise ein systemweites Energiemanagement implementieren und die einzelnen Anschlusseinheiten zu einem Gesamtsystem zusammensetzen.

Der Systemcontroller kann entsprechend einen Baum von Systemkomponenten und Anschlusseinheiten entwickeln, so dass sämtliche Anschlusseinheiten zu einem kompletten System miteinander gekoppelt werden.

Aus einem Konfigurationsfile erkennt der Master der Systemcontroller, wie die jeweiligen Anschlusseinheiten miteinander verbunden sind und kann im Falle eines auftretenden Systemfehlers eine Entscheidung dahingehend treffen, dass bestimmte Kontakte hergestellt oder gelöst werden.

Weiterhin kann der Mastersystemcontroller auch eine Energiemanagementstrategie implementieren und definieren, die dann auf die jeweiligen energieerzeugenden Vorrichtungen und die energiekonsumierenden Komponenten an Bord angewendet wird.

Der Mastersystemcontroller kann weiterhin Informationen sammeln und Warnungen und Fehler erkennen, um zu reagieren und diese dem jeweiligen Bediener zu kommunizieren oder sie in dem System-Eventlog aufzunehmen.

Weiterhin kann in dem Mastersystemcontroller ein Anzeigeserver vorgesehen sein, welcher unterschiedliche Anzeigen, welche in dem System vorgesehen sind, miteinander verbindet und diese als Anzeigenclients oder Displayclients betrieben, wobei unterschiedliche Displays auch unterschiedliche Darstellungen auf der Grundlage der gleichen Daten liefern können. Der Mastersystemcontroller kann auch mit mobilen Handgeräten kommunizieren, beispielsweise mit einem Smartphone oder einem Tablet, um auf diese Weise ebenfalls Systemdaten anzuzeigen.

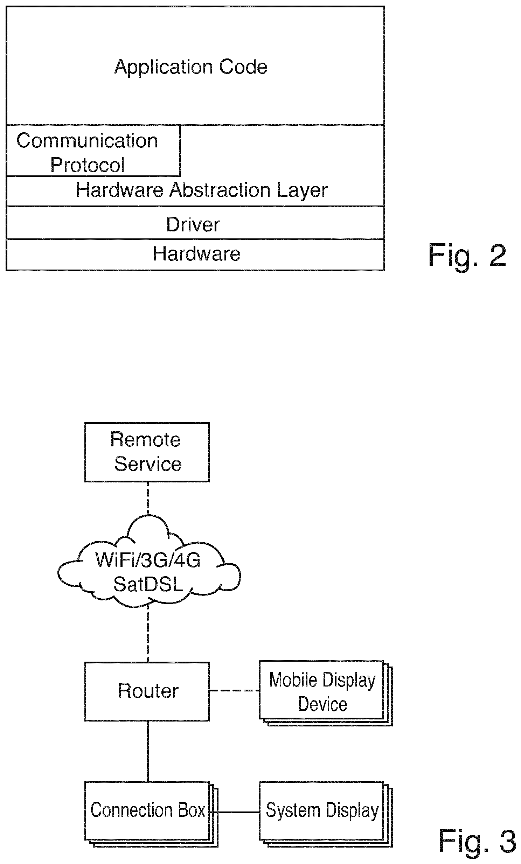

Der Mastersystemcontroller kann weiterhin als eine Servicezugangsstelle dienen, wobei ein Servicetechniker sich mittels des Mastersystemcontrollers beispielsweise über einen verschlüsselten Kanal in das System einloggen kann und einen Fehler finden kann beziehungsweise Software-Updates einspielen kann. Eine mögliche Implementierung findet sich in Figur 3.

Durch den Aufbau der Anschlusseinheit auf Basis einer Mehrzahl von Komponentencontrollern und einem Anschlusseinheitscontroller in Kombination mit einem Systemcontroller lässt sich im Vergleich zu herkömmlich aufgebauten Systemen, bei welchen jede Systemkomponente einzeln angesteuert werden muss, die Anzahl und Länge der notwendigen Kabelverbindungen signifikant reduzieren. Durch die Reduktion der Kabelverbindungen kann weiterhin die Zuverlässigkeit des Gesamtsystems verbessert werden.

Bevorzugt ist auch die Hochvoltverteilung in der Anschlusseinheit beziehungsweise einer die Anschlusseinheit aufnehmenden Gehäusestruktur vorgesehen, wobei beispielsweise in einer ersten Lage der Anschlusseinheitscontroller, die Komponentencontroller und der Systemcontroller vorgesehen sein können, und in einer zweiten Lage, beispielsweise unterhalb der die Komponentencontroller, den Anschlusseinheitscontroller und den Systemcontroller ausbildenden Platinen, die Hochvoltverteilung angeordnet sein kann.

Bezüglich der Kommunikation zwischen dem Anschlusseinheitscontroller und den Komponentencontrollern ist bevorzugt ein Systembus vorgesehen, mittels welchem die abstrahierten Systemkomponenten Informationen beziehungsweise die abstrahierten Komponenteninformationspakete zwischen den Komponentenschnittstellen und der Anschlusseinheitscontroller ausgetauscht werden können. Hierzu kann beispielsweise ein CANopen-Protokoll oder ein anderes standardisiertes oder proprietäres Protokoll verwendet werden.

Auf diese Weise kann auch die Hauptstruktur für eine Notfahrfunktion bereitgestellt werden, wobei hierfür eine Kombination aus Komponentencontrollern und Anschlusseinheitscontroller ausreichend vorgesehen sind, um die Notfahrfunktion bereit zu stellen. Eine Kommunikation für die Notfahrfunktion findet zwischen dem Anschlusseinheitscontroller, an den beispielsweise ein Ferngasgriff angeschlossen ist, und mindestens einer der Komponentencontroller statt. Die Kommunikation zwischen dem Anschlusseinheitscontroller und dem Komponentencontroller findet über den Systembus statt, der gegenüber anderen Kommunikationspartnern Dritter in sich abgeschlossen ist.

Die Anschlusseinheit mit den Komponentencontrollern, dem Anschlusseinheitscontroller und auch dem Systemcontroller kann abgeschlossen in der Anschlusseinheit vorgesehen sein und kommunizieren über diesen Systembus. Weitere Komponenten sind hier nicht erlaubt, so dass der Bus zur Kommunikation zwischen den Komponentencontrollern, dem Anschlusseinheitscontroller und dem Systemcontroller innerhalb der Anschlusseinheit ausschließlich durch diese Komponenten besetzt ist, und keine weiteren, von außen einwirkenden Komponenten, beispielsweise von Drittanbietern, über diesen Bus kommunizieren können.

Die Kommunikation zwischen einzelnen Anschlusseinheiten und insbesondere zwischen den Systemcontrollern der einzelnen Anschlusseinheiten kann beispielsweise über eine Ethernet-Verbindung hergestellt werden.

Die Verbindungen zu den Anzeigedisplays und beispielsweise zu Mehrfunktionsdisplays (MFD), Bootnetzwerken usw. wird bevorzugt auch über eine Ethernet-Verbindung innerhalb des Boots erreicht.

Sowohl jeder Komponentencontroller als auch jeder Anschlusseinheitscontroller als auch jeder Systemcontroller umfassen jeweils einen eigenen Mikroprozessor, über welchen die entsprechenden Anwendungen abgearbeitet werden können, und über welche die Kommunikation über die entsprechenden Busse abgewickelt werden kann.

Bezüglich der Struktur der Implementierung ist, wie aus Figur 2 zu erkennen, eine Schichtenstruktur vorgesehen, bei welcher der Code (Driver) des Komponentencontrollers bezüglich der Komponentenschnittstelle (Hardware), an welcher eine Komponente des Elektroantriebs angeschlossen werden kann, in einer separaten Schicht vorgesehen ist. Auch das Abstraktionsmodul (Hardware Abstraction Layer), mittels welchem eine Abstraktion der spezifischen Steuerparameter und Zustandsparameter der jeweiligen Systemkomponente auf das Niveau einer generischen Systemkomponente abstrahiert wird, ist in einer eigenen Schicht vorgesehen.

Eine Abgrenzung der einzelnen Schichten untereinander kann dadurch erreicht werden, dass die Software jeweils als in sich gekapselte Klassen geschrieben ist, ohne eine direkte Kopplung an eine spezifische Systemkomponente.

Um so flexibel wie möglich zu sein, ist der Softwarecode in einer Schichtenarchitektur bereitgestellt. In der Hardware-Abstraktionslage ist auch ein einfacher Round Robin Scheduler vorgesehen, welcher es einfach macht, unterschiedlich priorisierte Tasks gleichzeitig auszuführen.

Das Kommunikationsprotokoll (Communication Protocol) und der eigentliche Anwendungscode (Application Code) sind weiterhin vollständig von der spezifischen Hardware und auch den anderen Schichten abgekoppelt.

Entsprechend kann beim Aufbau des Systems ein Entwickler, welcher eine spezifische Systemkomponente entwickelt, sich auf eine zuverlässige und sichere Implementierung dieser spezifischen Systemkomponente fokussieren und muss den Rest des Systems dabei nicht berücksichtigen. Entsprechend können hochkomplexe Systeme mit einer großen Anzahl an unterschiedlichen Systemkomponenten und einer großen Anzahl an Nebenkomponenten auf eine einfache Art und Weise sicher aufgebaut werden. Jede detektierte Systemkomponente resultiert in einer Instanz der spezifischen Systemkomponentenklasse und wird entsprechend durch das Abstraktionsmodul als eine logische Systemkomponente beziehungsweise eine generische Systemkomponente auf dem internen CANopen-Bus repräsentiert.

Der Code wird besonders bevorzugt automatisiert erzeugt, auf der Basis eines entsprechenden Designpatterns und auf Grundlage einer entsprechenden Datenbank, in welcher sämtliche komponentenspezifischen Daten umfasst sind. Darüber hinaus sind auch die Daten für die Komponentenabstraktion, die Datentypen, die Transferobjekte und die Komponentenfehler in dieser Datenbank definiert. Durch die Verwendung dieser Datenbank können sämtliche Veränderungen und Updates von komponentenspezifischen Daten automatisch in allen Hardware-Plattformen und insbesondere sowohl in den Komponentencontrollern als auch den Anschlusseinheitscontrollern als auch den Systemcontrollern inkorporiert und implementiert werden. Auf diese Weise kann die Komplexität, welche sich aus der verteilten Steuerungsstruktur ergibt, reduziert oder eliminiert werden, da eine zentrale Datendefinition vorhanden ist. Üblicherweise muss nämlich eine Schnittstelle auf ihren beiden Seiten definiert werden. Auf Grundlage der Bereitstellung des Komponentencontrollers, welcher über das Abstraktionsmodul eine abstrahierte beziehungsweise generische Systemkomponente bereitstellt, können die Systemfehler, die üblicherweise durch die Programmierung durch unterschiedliche Entwickler auftritt, reduziert beziehungsweise vermieden werden.

Mit anderen Worten kann aufgrund einer klaren Definition der Schnittstellen zwischen den einzelnen Schichten sowie einer zentralen Hinterlegung der Definitionen und des Generierens des Codes ein konsistentes und fehlerreduziertes bis fehlerfreies System erreicht werden.

Weiterhin kann aufgrund der verteilten Struktur mit den Komponentencontrollern, dem Anschlusseinheitscontroller, dem Systemcontroller und der Verbindung unterschiedlicher Anschlusseinheiten über die Kommunikation der Systemcontroller untereinander mittels einer zentralen Update-Funktion neue Software beziehungsweise aktualisierte Daten auf sämtliche Controller im gesamten System übertragen werden, so dass stets eine konsistente Version auf dem Mastersystemcontroller sowie den Slave-System-Controllern vorhanden ist.

Der Mastersystemcontroller sowie die Slave-System-Controller zwingen die Komponentencontroller sowie die Anschlusseinheitencontroller dazu, die neue Software mit den jeweiligen Bootloadern zu implementieren und auch über den CAN-Bus den jeweiligen Komponenten beziehungsweise Systemkomponenten zukommen zu lassen.

Auch die Systemkonfiguration an sich kann über eine zentrale Softwareverteilung und insbesondere über eine zentrale Datei erreicht werden, welche von beispielsweise durch den Servicetechniker editiert wird und dann an den Mastersystemcontroller übermittelt wird, welcher dann die Daten entsprechend weiter verteilt.

Die GUIs und andere Benutzerschnittstellen können beispielsweise über QT/QML geschrieben sein, so dass sie entsprechend über unterschiedliche Plattformen portabel sind auf Grundlage der gleichen Codebasis.

Die Komponentencontroller sind bevorzugt als separate Hardwarekomponenten, beispielsweise in Form von Steckmodulen, vorgesehen. Dann ist beispielsweise für jede anzuschließende spezifische physische Systemkomponente, welche beispielsweise eine Batterie, ein Elektromotor, ein Generator, ein Umrichter oder ein Verbrennungsmotorantrieb sein kann, ein separater Komponentencontroller vorgesehen.

## Patentansprüche

1. System, eingerichtet zum Betrieb eines mit einem Elektroantrieb ausgerüsteten Boots, umfassend einen Komponentencontroller, welcher eine Komponentenschnittstelle aufweist, die zum Anschließen einer spezifischen physischen Systemkomponente des Elektroantriebs eingerichtet ist, und weiterhin umfassend eine Kommunikationsschnittstelle, die zum Anschließen des Komponentencontrollers an einen Systembus einer Antriebssteuerung eingerichtet ist,
wobei der Komponentencontroller ein Abstraktionsmodul aufweist, welches dazu eingerichtet ist, eine an der Komponentenschnittstelle angeschlossene spezifische Systemkomponente des Elektroantriebs an der Kommunikationsschnittstelle am Systembus als generische Systemkomponente, welche die zum Betrieb des Systems notwendigen Steuerungs- und Zustandsparameter sowie Datenkommunikation und/oder Steuerbefehle in einer allgemeinen Form aufweist, ohne auf die spezifischen technischen Parameter der angeschlossen spezifischen Systemkomponente Rücksicht nehmen zu müssen, darzustellen,
**dadurch gekennzeichnet, dass**
eine übergeordnete Fahrtsteuerung eingerichtet ist, einen prozentualen Fahrbefehl über den Systembus zu übergeben und der Komponentencontroller eingerichtet ist, den prozentualen Fahrbefehl in eine entsprechende Drehzahlvorgabe, Drehmomentvorgabe oder Leistungsvorgabe für den spezifischen, an der Komponentenschnittstelle angeschlossenen Elektromotor und in einen der jeweiligen, an der Komponentenschnittstelle angeschlossenen Leistungselektronik gemäßen Steuerbefehl umzusetzen.

2. System gemäß Anspruch 1, **dadurch gekennzeichnet, dass** über eine einzige Komponentenschnittstelle mindestens zwei unterschiedliche Systemkomponenten alternativ anschließbar sind und der Komponentencontroller so eingerichtet ist, dass er abhängig von der angeschlossenen Systemkomponente so konfigurierbar ist, dass die jeweils angeschlossene spezifische Systemkomponente als generische Systemkomponente dargestellt wird.

3. System gemäß einem der vorstehenden Ansprüche, **dadurch gekennzeichnet, dass** die Komponentenschnittstelle des Komponentencontrollers Signalausgänge und Sensoreingänge und Bussschnittstellen zur Kommunikation mit einem Bus der Systemkomponente, bevorzugt einen CAN Bus, einen seriellen Bus, UART, LIN, RS485 oder RS232, aufweist.

4. System gemäß einem der vorstehenden Ansprüche, **dadurch gekennzeichnet, dass** ein Anschlusseinheitscontroller vorgesehen ist, welcher dazu eingerichtet ist, über den Systembus mit dem Komponentencontroller zu kommunizieren, wobei der Komponentencontroller dazu eingerichtet ist, über den Anschlusseinheitscontroller Fahrbefehle zu empfangen.

5. System gemäß Anspruch 4, **dadurch gekennzeichnet, dass** der Anschlusseinheitscontroller eingerichtet ist, mit einer Eingabevorrichtung zur Vorgabe einer Fahrstufe durch einen Bediener zu kommunizieren und der Anschlusseinheitscontroller eingerichtet ist, der vorgegebenen Fahrstufe entsprechend einen oder mehrere Komponentencontroller über den Systembus anzusteuern, um die vorgegebene Fahrtstufe zu erreichen.

6. System gemäß Anspruch 4 oder 5, **dadurch gekennzeichnet, dass** der Anschlusseinheitscontroller dazu eingerichtet ist, mindestens zwei Komponentencontroller zu einer organisatorischen Anschlusseinheit zusammenfassen und bevorzugt die grundlegenden Fahrfunktionen des Elektroantriebs zu steuern.

7. System gemäß einem der Ansprüche 4 bis 6, **dadurch gekennzeichnet, dass** mindestens zwei Komponentencontroller und ein Anschlusseinheitscontroller gemeinsam in einem eine Anschlusseinheit ausbildenden Gehäuse aufgenommen sind.

8. System gemäß einem der vorstehenden Ansprüche, **dadurch gekennzeichnet, dass** ein Systemcontroller vorgesehen ist, eingerichtet, mit mindestens einem Komponentencontroller und einem Anschlusseinheitscontroller über den Systembus zu kommunizieren, wobei der Systemcontroller dazu eingerichtet ist, Zustandsdaten von den Komponentencontrollern und dem Anschlusseinheitscontroller aufzunehmen und zu verarbeiten.

9. System gemäß einem der vorstehenden Ansprüche, **dadurch gekennzeichnet, dass** mindestens zwei Anschlusseinheiten mit jeweils mindestens einem Komponentencontroller, einem Anschlusseinheitscontroller und einem Systemcontroller vorgesehen sind und die Systemcontroller der Anschlusseinheiten dazu eingerichtet sind, miteinander zu kommunizieren, wobei ein Systemcontroller als Mastersystemcontroller fungiert und alle anderen Systemcontroller als Slave-Systemcontroller betrieben werden.

10. System gemäß einem der vorstehenden Ansprüche, **dadurch gekennzeichnet, dass** der Komponentencontroller dazu eingerichtet ist, die an die Komponentenschnittstelle angeschlossene Systemkomponente zu erkennen und eine Initialisierung entsprechend der jeweiligen spezifischen Systemkomponente durchzuführen.

11. System gemäß einem der vorstehenden Ansprüche, **dadurch gekennzeichnet, dass** als Systemkomponente eine Batterie, ein Elektromotor, ein Ladegerät, ein DC/DC Wandler, ein DC/AC Wandler, ein Generator, ein Nebenaggregat etc. an den Komponentencontroller angeschlossen ist.

## Claims

1. System configured for operating a boat equipped with an electric drive, comprising a component controller which has a component interface configured for connecting a specific physical system component of the electric drive, and further comprising a communication interface configured for connecting the component controller to a system bus of a drive controller, wherein the component controller having an abstraction module which is configured to represent a specific system component of the electric drive connected to the component interface at the communication interface on the system bus as a generic system component which has the control and status parameters and data communication and/or control commands necessary for operating the system in a general form without having to take into account the specific technical parameters of the connected specific system component
**characterized in that**
a higher-level drive control is configured to transmit a percentage drive command via the system bus and the component controller is configured to convert the percentage drive command into a corresponding rotational frequency specification, torque specification or power specification for the specific electric motor connected to the component interface and into a control command corresponding to the respective power electronics connected to the component interface.

2. System according to claim 1, **characterized in that** at least two different system components are alternatively connectable via a single component interface and the component controller is configured such that it is configurable depending on the connected system component such that the respectively connected specific system component is represented as a generic system component.

3. System according to any of the preceding claims, **characterized in that** the component interface of the component controller comprises signal outputs and sensor inputs and bus interfaces for communication with a bus of the system component, preferably a CAN bus, a serial bus, UART, LIN, RS485 or RS232.

4. System according to any one of the preceding claims, **characterized in that** a connection unit controller is provided, which is configured to communicate with the component controller via the system bus, wherein the component controller is configured to receive drive commands via the connection unit controller.

5. System according to claim 4, **characterized in that** the connection unit controller is configured to communicate with an input device for presetting a speed level by an operator and the connection unit controller is configured to control one or more component controllers via the system bus in accordance with the set speed level in order to achieve the set speed level.

6. System according to claim 4 or 5, **characterized in that** the connection unit controller is configured to combine at least two component controllers into one organizational connection unit and preferably to control the basic drive functions of the electric drive.

7. System according to any one of claims 4 to 6, **characterized in that** at least two component controllers and a connection unit controller are incorporated together in a housing forming a connection unit.

8. System according to any one of the preceding claims, **characterized in that** a system controller is provided, configured to communicate with at least one component controller and a connection unit controller via the system bus, wherein the system controller is configured to receive and process status data from the component controllers and the connection unit controller.

9. System according to any one of the preceding claims, **characterized in that** at least two connection units are provided, each having at least one component controller, one connection unit controller and one system controller, and the system controllers of the connection units are configured to communicate with one another, wherein one system controller serves as master system controller and all other system controllers are operated as slave system controllers.

10. System according to any of the preceding claims, **characterized in that** the component controller is configured to recognize the system component connected to the component interface and to perform an initialization according to the respective specific system component.

11. System according to any of the preceding claims, **characterized in that** a battery, an electric motor, a charger, a DC/DC converter, a DC/AC converter, a generator, an auxiliary unit, etc. is connected to the component controller as a system component.

## Revendications

1. Système, mis en place
pour faire fonctionner un bateau équipé d'une propulsion électrique, comprenant un contrôleur de composants ayant une interface de composants aménagée pour être connectée à un composant de système physique spécifique de la propulsion électrique, et comprenant en outre une interface de communication adaptée pour connecter le contrôleur de composants à un bus système d'un contrôleur de propulsion,
où
le contrôleur de composants comprend un module d'abstraction qui est conçu pour présenter un composant de système spécifique de la propulsion électrique connecté à l'interface de composants, à l'interface de communication, au bus système, en tant que composant générique du système, qui contient les paramètres de commande et d'état nécessaires au fonctionnement du système ainsi que la communication de données et/ou des commandes de contrôle sous une forme générale, sans devoir tenir compte des paramètres techniques spécifiques du composant du système spécifique raccordé,
**caractérisé en ce qu'**
une commande de déplacement supérieure est aménagée pour transmettre une commande de déplacement en pourcentage par l'intermédiaire du bus système et le contrôleur de composants est aménagé pour convertir la commande de déplacement en pourcentage en une définition de la vitesse de rotation, une définition du couple ou une puissance prédéfinie correspondante pour le moteur électrique spécifique raccordé à l'interface de composants et en une commande de contrôle correspondante à l'électronique de puissance respective raccordée à l'interface de composants.

2. Système selon la revendication 1, **caractérisé en ce qu'**au moins deux composants de systèmes différents peuvent être raccordés alternativement par l'intermédiaire d'une seule interface de composants et le contrôleur de composants est agencé de telle sorte qu'il peut être configuré en fonction du composant de système raccordé de telle sorte que le composant de système spécifique respectivement raccordé est représenté en tant que composant de système générique.

3. Système selon l'une des revendications précédentes, **caractérisé en ce que** l'interface de composants du contrôleur de composants comprend des sorties de signaux et des entrées de capteurs et des interfaces bus pour communiquer avec un bus du composant du système, de préférence un bus CAN, un bus série, UART, LIN, RS485 ou RS232.

4. Système selon l'une des revendications précédentes, **caractérisé en ce qu'**un contrôleur d'unité de connexion est prévu, qui lui est adapté pour communiquer avec le contrôleur de composants via le bus système, le contrôleur de composants étant adapté pour recevoir des commandes de déplacement via le contrôleur d'unité de connexion.

5. Système selon la revendication 4, **caractérisé en ce que** le
contrôleur d'unité de connection est agencé,
avec un dispositif de saisie pour la spécification d'une vitesse de déplacement, communiqué par un opérateur, et le contrôleur d'unité de connexion est agencé de manière à répondre à la vitesse de déplacement prédéterminée, de commander un ou plusieurs contrôleurs de composants via le bus système afin d'atteindre le niveau de vitesse de déplacement prédéfini.

6. Système selon la revendication 4 ou 5, **caractérisé en ce que** le contrôleur d'unité de connexion est conçu pour regrouper au moins deux contrôleurs de composants en une unité de connexion organisationnelle et pour commander de préférence les fonctions de conduite fondamental de la propulsion électrique.

7. Système selon l'une des revendications 4 à 6, **caractérisé en ce qu'**au moins deux contrôleurs de composants et un contrôleur d'unité de raccordement sont logés ensemble dans un boîtier formant une unité de connection.

8. Système selon l'une des revendications précédentes, **caractérisé en ce qu'**un contrôleur de système est prévu, mis en place,
avec au moins un contrôleur de composants
et un contrôleur d'unité de raccordement communiquant par l'intermédiaire du bus système, le contrôleur système étant agencé pour recevoir et traiter des données d'état provenant des contrôleurs de composants et du contrôleur d'unité de raccordement.

9. Système selon l'une des revendications précédentes, **caractérisé en ce qu'**au moins deux unités de raccordement sont prévues, ayant chacune au moins un contrôleur de composants, un contrôleur d'unité de raccordement et un contrôleur de système, et les contrôleurs de système des unités de raccordement sont conçus pour communiquer entre eux, un contrôleur de système fonctionnant comme contrôleur de système maître et tous les autres contrôleurs de système fonctionnant comme contrôleurs de système esclave.

10. Système selon l'une des revendications précédentes, **caractérisé en ce que** le contrôleur de composants est agencé pour reconnaître le composant du système connecté à l'interface de composants et pour effectuer une initialisation en fonction du composant du système spécifique respectif.

11. Système selon l'une des revendications précédentes, **caractérisé en ce qu'**une batterie, un moteur électrique, un chargeur, un convertisseur DC/DC, un convertisseur DC/AC, un générateur, un groupe auxiliaire, etc. est connecté au contrôleur de composants en tant que composant du système.
